# EUROPEAN PATENT APPLICATION

(11) **EP 3 588 331 A1**
(43) Date of publication of application: **01.01.2020**
(21) Application number: 18196501.3
(22) Date of filing: 25.09.2018
(51) Int. Cl.: G06F 17/50

(54) **METHOD AND DEVICE FOR OPTIMIZATION DESIGN OF ENGINE HOOD**

(30) Priority: 28.06.2018 CN 201810691897
(71) Applicant: Dong Han New Energy Automotive Technology Co., Ltd, 201801 Shanghai (CN)
(72) Inventor: Wang, Wei, Shanghai, 201801 (CN)
(74) Representative: Soria Parra, Manuel

(57) **Abstract**

The invention relates to a method and a device for optimization design of an engine hood. The method includes: obtaining an optimization design space of optimization design variables, the optimization design variables including a mechanical property constant of a composite material and a working condition performance parameter of the engine hood, and a material of the engine hood including the composite material; sampling each of the optimization design variables in the optimization design space by an orthogonal test design method to obtain multiple sets of sampled data, wherein each set of the sampled data includes one optimization design variable in the optimization design space; establishing a working condition response surface model of the engine hood according to the multiple sets of sampled data; and performing an optimization design on the engine hood according to the working condition response surface model.

## Description

### TECHNICAL FIELD

The present invention relates to the technical field of automobile design, and in particular, to a method and a device for optimization design of an engine hood.

### BACKGROUND

An engine hood of an automobile is an important exterior part of the automobile. It is a plate-like member that effectively protects automotive parts such as an engine provided at the front end of the automobile. In order to effectively protect the automotive parts provided under the engine hood of the automobile, it is necessary to provide the engine hood of the automobile with the ability to resist impact load exerted to the automobile in use and also with good dent resistance, so as to effectively protect the automotive parts provided under the engine hood of the automobile. Therefore, it is very important to optimize the design plan of the engine hood in the design process of the engine hood.

At present, in the process of designing an engine hood, the sampling method used for optimizing design plan of an engine hood is a random orthogonal test design method. Although the random orthogonal test design method can better cover the entire design space than conventional test design methods, it is still possible that the sampling points are not distributed evenly enough so that the possibility of losing some areas of the design space increases as the number of levels increases, thus making the fitting of the factors and responses not accurate enough and making the final optimization design plan of the engine hood not accurate enough.

### SUMMARY

In order to address the above technical problem, the sampling method used in the optimization of the design plan of the engine hood is improved in the present invention, so that the distribution of sampling points is more even than the random orthogonal test design method, thereby improving accuracy of the fitting of the factors and responses and making the final optimization design plan of the engine hood more accurate. Embodiments of the present invention provide a method and a device for optimization design of an engine hood. The technical solutions are as follows.

According to a first aspect of the embodiments of the present invention, a method for optimization design of an engine hood is provided, which includes:
obtaining an optimization design space of optimization design variables, the optimization design variables including a mechanical property constant of a composite material and a working condition performance parameter of the engine hood, and a material of the engine hood including the composite material;
sampling each of the optimization design variables in the optimization design space by an orthogonal test design method, to obtain multiple sets of sampled data, wherein each set of the sampled data includes one optimization design variable in the optimization design space;
establishing a working condition response surface model of the engine hood according to the multiple sets of sampled data; and
performing an optimization design on the engine hood according to the working condition response surface model.

The technical solution provided by the embodiment of the present invention may bring about the following advantageous effects: obtaining an optimization design space of optimization design variables; the optimization design variables including a mechanical property constant of a composite material and a working condition performance parameter of the engine hood; the material of the engine hood including the composite material; sampling each of the optimization design variables in the optimization design space by an orthogonal test design method to obtain multiple sets of sampled data; wherein each set of the sampled data includes one optimization design variable in the optimization design space; establishing a working condition response surface model of the engine hood according to the multiple sets of sampled data; and performing an optimization design on the engine hood according to the working condition response surface model. Since the orthogonal test design method can distribute all sampling points as evenly as possible in the optimization design space, it brings about excellent balance and space filling property, such that the orthogonal test design method makes the fitting of factors and responses more accurate and more real due to an improvement on the unevenness of the sampling points in a random orthogonal test design, and further makes the final optimization design plan of the engine hood more accurate.

In an embodiment, said performing an optimization design on the engine hood according to the working condition response surface model includes:
verifying, by using a preset simulation model, whether a target optimization design variable value in the working condition response surface model satisfies an optimization target; and
optimizing the engine hood according to the optimization design variable value that satisfies the optimization target when it is verified by using the preset simulation model that the target optimization design variable value in the working condition response surface model satisfies the optimization target.

In an embodiment, said performing an optimization design on the engine hood according to the working condition response surface model includes:
performing an optimizing calculation on the working condition response surface model by using a preset optimization algorithm, to obtain the target optimization design variable value; and
performing the optimization design on the engine hood according to the target optimization design variable value.

In an embodiment, the preset optimization algorithm includes a multi-island genetic optimization algorithm.

In an embodiment, said obtaining an optimization design space of optimization design variables includes:
obtaining measured values of the optimization design variables; and
obtaining the optimization design space of the optimization design variables according to the measured values of the optimization design variables.

In an embodiment, said obtaining measured values of the optimization design variables includes:
obtaining a measured value of the mechanical property constant of the composite material;
establishing a finite element model of the engine hood; and
obtaining a measured value of the working condition performance parameter of the engine hood according to the measured value of the mechanical property constant of the composite material and the finite element model of the engine hood.

According to a second aspect of the embodiment of the present invention, a device for optimization design of an engine hood is provided, which includes:
an obtaining module, configured to obtain an optimization design space of optimization design variables, the optimization design variables including a mechanical property constant of a composite material and a working condition performance parameter of the engine hood, and a material of the engine hood including the composite material;
a sampling module, configured to sample by an orthogonal test design method each of the optimization design variables in the optimization design space obtained by the obtaining module, to obtain multiple sets of sampled data, wherein each set of the sampled data includes one optimization design variable in the optimization design space;
an establishing module, configured to establish a working condition response surface model of the engine hood according to the multiple sets of sampled data sampled by the sampling module; and
an optimization module, configured to perform an optimization design on the engine hood according to the working condition response surface model established by the establishing module.

In an embodiment, the optimization module includes a verification sub-module and a first optimization sub-module,
wherein the verification sub-module is configured to verify, by using a preset simulation model, whether a target optimization design variable value in the working condition response surface model established by the establishing module satisfies an optimization target; and
the first optimization sub-module is configured to, when the verification sub-module verifies by using a preset simulation model the target optimization design variable value in the working condition response surface model established by the establishing module, optimize the engine hood according to the optimization design variable value that satisfies the optimization target.

In an embodiment, the optimization module includes an optimizing sub-module and a second optimization sub-module,
wherein the optimizing sub-module is configured to perform by using a preset optimization algorithm an optimizing calculation on the working condition response surface model established by the establishing module, to obtain the target optimization design variable value; and
the second optimization sub-module is configured to perform the optimization design on the engine hood according to the target optimization design variable value obtained by the optimizing sub-module.

In an embodiment, the preset optimization algorithm includes a multi-island genetic optimization algorithm.

In an embodiment, the obtaining module includes a first obtaining sub-module and a second obtaining sub-module,
wherein the first obtaining sub-module is configured to obtain a measured value of an optimization design variable; and
the second obtaining sub-module is configured to obtain the optimization design space of the optimization design variable according to the measured value of the optimization design variable obtained by the first obtaining sub-module.

In an embodiment, the first obtaining sub-module includes a third obtaining sub-module, an establishing sub-module, and a fourth obtaining sub-module,
wherein the third obtaining sub-module is configured to obtain a measured value of the mechanical property constant of the composite material;
the establishing sub-module is configured to establish a finite element model of the engine hood; and
the fourth obtaining sub-module is configured to obtain, according to the measured value of the mechanical property constant of the composite material obtained by the third obtaining sub-module and the finite element model of the engine hood established by the establishing sub-module, a measured value of the working condition performance parameter of the engine hood.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart of a method for optimization design of an engine hood according to an exemplary embodiment.
Fig. 2 is a schematic diagram of the distribution of sampling points in an orthogonal test design method according to an exemplary embodiment.
Fig. 3 is a schematic diagram of a frame model of an engine hood according to an exemplary embodiment.
Fig. 4 is a flow chart of a method for optimization design of an engine hood according to an exemplary embodiment.
Fig. 5 is a block diagram of a device for optimization design of an engine hood according to an exemplary embodiment.
Fig. 6 is a block diagram of an optimization module in a device for optimization design of an engine hood according to an exemplary embodiment.
Fig. 7 is a block diagram of an optimization module in a device for optimization design of an engine hood according to an exemplary embodiment.
Fig. 8 is a block diagram of an obtaining module in a device for optimization design of an engine hood according to an exemplary embodiment.
Fig. 9 is a block diagram of a first obtaining sub-module in a device for optimization design of an engine hood according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the invention. Instead, they are merely examples of apparatuses and methods consistent with aspects related to the invention as recited in the appended claims.

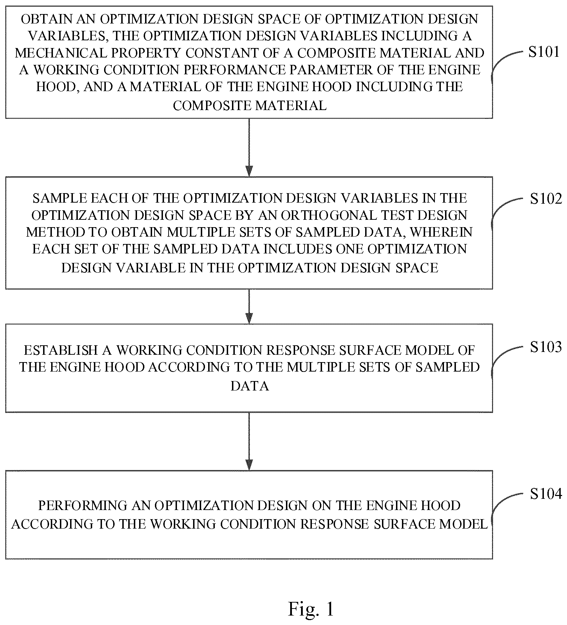

Fig. 1 is a flow chart of a method for optimization design of an engine hood according to an exemplary embodiment. As shown in Fig. 1, the method includes the following steps S101-S104:

In step S101: an optimization design space of optimization design variables is obtained; the optimization design variables including a mechanical property constant of a composite material and a working condition performance parameter of the engine hood; the material of the engine hood including the composite material.

During optimization design of the engine hood, it is necessary to perform an optimization design based on various sampling points in an optimization design space of optimization design variables. Therefore, it is necessary to obtain the optimization design space of optimization design variables.

The above optimization design variables include: a mechanical property constant of the composite material and a working condition performance parameter of the engine hood. However, it should be noted that practical applications are not limited to the above two types of optimization design variables.

The working condition performance parameter includes at least one of the following parameters: a mounting point stiffness of the engine hood, an outer plate stiffness of the engine hood, and a wing tip stiffness of the engine hood.

In an example in which the working condition performance parameter is the mounting point stiffness of the engine hood, the optimization design space of the mounting point stiffness of the engine hood as obtained can be 40N/mm-60N/mm.

The optimization design space of the above optimization design variables can be obtained through an engineering manual or experience or other methods, and the present invention has no limitations on the method for obtaining the optimization design space of optimization design variables.

In step S102, each of the optimization design variables in the optimization design space is sampled by an orthogonal test design method, to obtain multiple sets of sampled data, wherein each set of the sampled data includes one optimization design variable in the optimization design space.

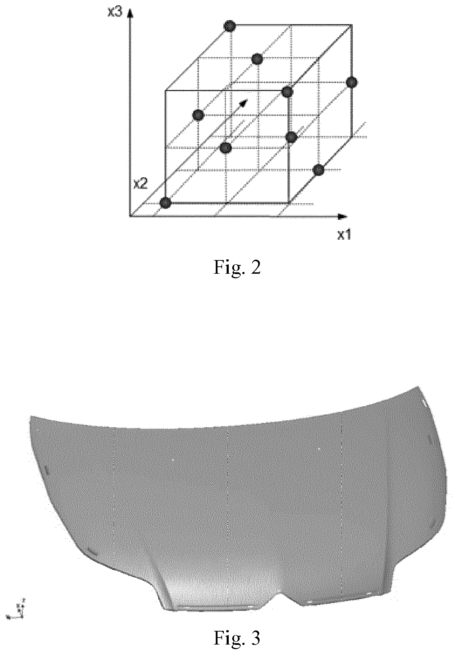

Fig. 2 is a schematic diagram of the distribution of sampling points in an orthogonal test design method according to an exemplary embodiment. As shown in Fig. 2, the orthogonal test design (also referred to as Optimal Latin hypercube design, abbreviated as "Opt LHD") method is an efficient, fast and economical test design method which uses orthogonal arrays to arrange multi-factor test and sampling according to an orthogonal table. The orthogonal test design method can make all sampling points be distributed in the optimization design space as evenly as possible, resulting in excellent balance and space filling property such that the fitting of factors and responses is more accurate and more real.

After obtaining the optimization design space of the optimization design variables, the orthogonal test design method is used for sampling each of the optimization design variables in the optimization design space, to obtain multiple sets of sampled data.

Continuing to follow the above example, the orthogonal test design method is used for sampling each of the optimization design variables in the optimization design space of the mounting point stiffness of the engine hood. In this case, a sampling interval can be preset or can be manually set by a user. For example, the sampling interval may be 5, then the sampling points are 40N/mm, 45N/mm, 50N/mm, 55N/mm, and 60N/mm respectively, and a set of sampled data corresponding to the sampling point is obtained for each sampling point, thereby obtaining multiple sets of sampled data.

The aforementioned is only exemplary. In practical applications, instead of being limited to sampling each of the optimization design variables in the optimization design space of the mounting point stiffness of the engine hood, the above sampling should be performed on the optimization design space of all the optimization design variables.

In step S103, a working condition response surface model of the engine hood is established according to the multiple sets of sampled data.

A Response Surface Methodology (RSM) is to use a polynomial function to fit the design space.

In step S104, an optimization design on the engine hood is performed according to the working condition response surface model.

The technical solution provided by the embodiment of the present invention may bring about the following advantageous effects: obtaining an optimization design space of optimization design variables; the optimization design variables including a mechanical property constant of a composite material and a working condition performance parameter of the engine hood; the material of the engine hood including the composite material; sampling each of the optimization design variables in the optimization design space by an orthogonal test design method to obtain multiple sets of sampled data; wherein each set of the sampled data includes one optimization design variable in the optimization design space; establishing a working condition response surface model of the engine hood according to the multiple sets of sampled data; and performing an optimization design on the engine hood according to the working condition response surface model. Since the orthogonal test design method can distribute all sampling points as evenly as possible in the optimization design space, it brings about excellent balance and space filling property, such that the orthogonal test design method makes the fitting of factors and responses more accurate and more real due to an improvement on the unevenness of the sampling points in a random orthogonal test design, and further makes the final optimization design plan of the engine hood more accurate.

In an embodiment, the above step S104 includes the following sub-steps A1-A2.

In A1, it is verified by using a preset simulation model whether a target optimization design variable value in the working condition response surface model satisfies an optimization target.

For example, it can be verified by finite element simulation whether the target optimization design variable value satisfies the optimization target.

In A2, when it is verified by using the preset simulation model that the target optimization design variable value in the working condition response surface model satisfies the optimization target, the engine hood is optimized according to the optimization design variable value that satisfies the optimization target.

In a possible implementation, a target optimization design variable value can be selected in the working condition response surface model, but the target optimization design variable value as selected may not satisfy the optimization target. Therefore, it is further required to use the preset simulation model to verify whether the target optimization design variable value in the working condition response surface model satisfies the optimization target, and only when the target optimization design variable value satisfies the optimization target, the engine hood will be optimized according to the optimization design variable value that satisfies the optimization target.

In another possible implementation, there may be a plurality of target optimization design variable values selected in the working condition response surface model. However, like the above embodiment, the target optimization design variables may include target optimization design variable(s) that does/do not satisfy the optimization target. Therefore, it is further required to use the preset simulation model to verify whether each of the target optimization design variable values in the working condition response surface model satisfies the optimization target, and only when the target optimization design variable value satisfies the optimization target, the engine hood will be optimized according to the optimization design variable value that satisfies the optimization target.

The optimization target can be preset, or can be manually set by a user. The present invention has no limitations on the method for obtaining the optimization target or on parameter type and target value of the optimization target.

The target optimization design variable value in the working condition response surface model is verified, thus improving reliability of optimization of the engine hood.

In an embodiment, the above step S104 includes the following sub-steps B1-B2.

In B1, an optimizing calculation is performed on the working condition response surface model by using a preset optimization algorithm, to obtain the target optimization design variable value.

For example, a multi-island genetic optimization algorithm can be employed. Of course, other optimization algorithms can also be employed. The present invention has no limitations on the type of optimization algorithms.

In B2, the optimization design on the engine hood is performed according to the target optimization design variable value.

The target optimization design variable value in the working condition response surface model is obtained by the preset optimization algorithm, thus increasing the accuracy of determination of the target optimization design variable value.

In another embodiment, after the optimizing calculation is performed on the working condition response surface model by the preset optimization algorithm, to obtain the target optimization design variable value, the above steps A1-A2 may also be executed, i.e., verifying by using the preset simulation model whether the target optimization design variable value in the working condition response surface model satisfies the optimization target.

In an embodiment, the above step S101 includes the following sub-steps C1-C2.

In C1, measured values of the optimization design variables are obtained.

In C2, the optimization design space of the optimization design variables is obtained according to the measured values of the optimization design variables.

Since the composite material for manufacturing the engine hood of the automobile is known, the measured values of the optimization design variables can be obtained directly based on the composite material, and then the optimization design space of the optimization design variables is obtained according to the measured values of the optimization design variables. In this way, the optimization design space of the determined optimization design variables can be more accurate.

In an embodiment, the above step C1 includes the following sub-steps D1-D3.

In D1, a measured value of the mechanical property constant of the composite material is obtained.

In a possible implementation, the above mechanical property constant may include mechanical property values in the linear and elastic phases.

In order to achieve accurate measurement of mechanical properties of the composite material, in another possible implementation, the mechanical property constant is not limited to the linear and elastic phases, and should cover the nonlinear (such as elastoplastic, viscoelastic, etc.) phases; and even the influence of the temperature on material properties should be taken into consideration.

In this case, a measured value of a nonlinear mechanical property constant of the composite material can be obtained by using Digimat software.

In an embodiment in which the composite material is a three-dimensional machine-woven/woven carbon fiber composite material, the fiber filament used in the present embodiment is AS4 of Hexcel composite material, and the matrix is epoxy resin 3506-6. The carbon fiber filament is a transversely isotropic material. E_{1f} is defined as axial elastic modulus of the fiber, E_{2f} is transverse elastic modulus of the fiber, G_{12f} is in-plane shear modulus of the fiber, G_{23f} is out-of-plane shear modulus of the fiber, v_{12f} is main Poisson's ratio, v_{23f} is transverse Poisson's ratio, and ρ_{f} is fiber density; the matrix is isotropic material, Em is matrix elastic modulus, Gm is matrix shear modulus, vₘ is matrix Poisson's ratio, and ρₘ is matrix density. Using the Digimat software in combination with the microstructure diagram of the three-dimensional machine-woven/woven carbon fiber composite material, mechanical property constant values of fiber filaments in the three-dimensional machine-woven/woven carbon fiber composite material as shown in Table 1, and mechanical property constant values of the matrix in the machine-woven/woven carbon fiber composite material as shown in Table 2 are obtained.

**Table 1 Mechanical Property Constant Values of Fiber Filaments**

| | type | E_{1f}(GPa) | E_{2f}(GPa) | v_{12f} | v_{23f} | G_{12f}(GPa) | G_{23f}(GPa) | ρ_{f}(g/cm³) |
|---|---|---|---|---|---|---|---|---|
| fiber | Carbon fiber | 235 | 15 | 0.2 | 0.2 | 27 | 7 | 1.8 |

**Table 2 Mechanical Property Constant Values of Matrix**

| | type | Em(GPa) | vₘ | Gm(GPa) | ρₘ(g/cm³) |
|---|---|---|---|---|---|
| matrix | epoxy resin 3506-6 | 4.3 | 0.35 | 1.6 | 1.27 |

Further, using the Digimat software in combination with the microstructure diagram of the three-dimensional machine-woven/woven carbon fiber composite material, the mechanical property constant values of the fiber bundles having a fiber volume fraction of 70% in the three-dimensional machine-woven/woven carbon fiber composite material as shown in Table 3 are obtained. E₁ is axial elastic modulus of the fiber bundle, E₂ is transverse elastic modulus of the fiber bundle, G₁₂ is in-plane shear modulus of the fiber bundle, G₂₃ is out-of-plane shear modulus of the fiber bundle, and v₁₂ is main Poisson's ratio.

**Table 3 Mechanical Property Constant Values of the Fiber Bundles Having a Fiber Volume Fraction of 70%**

| | E₁(GPa) | E₂(GPa) | v₁₂ | v₂₃ | G₁₂(GPa) | G₂₃(GPa) |
|---|---|---|---|---|---|---|
| Digimat | 77 | 75 | 0.06 | 0.06 | 6.5 | 3 |

In D2, a finite element model of the engine hood is established.

The engine hood as shown in Fig. 3 can be finite element modeled by ABAQUS finite element software, to obtain a finite element model of the engine hood.

In D3, a measured value of the working condition performance parameter of the engine hood is obtained according to the measured value of the mechanical performance constant of the composite material and the finite element model of the engine hood.

The mechanical property constant obtained in D1 is input as material property, and static working condition simulation analysis is performed on the finite element model of the engine hood for several times to obtain the measured value of the working condition performance parameter of the engine hood.

For example, in the optimization of the engine hood, target values of the working condition performance parameters of the engine hood are: 1) mounting point stiffness of the engine hood: the value of mounting point stiffness of the engine hood is ≥50N/mm (deformation is ≤ 1mm after a force of 50N is applied); 2) outer plate stiffness of the engine hood: the value of outer plate stiffness of the engine hood is ≥100N/mm (deformation is ≤3mm after a force of 300N is applied); loading of a ball head having a diameter of 25.4 with a loading point being the geometric center of the outer plate and the maximum unsupported area; 3) other stiffness of the engine hood (for example, wing tip stiffness of the engine hood): recommended value of stiffness is ≥100N/mm (deformation is ≤ 3mm after a force of 300N is applied).

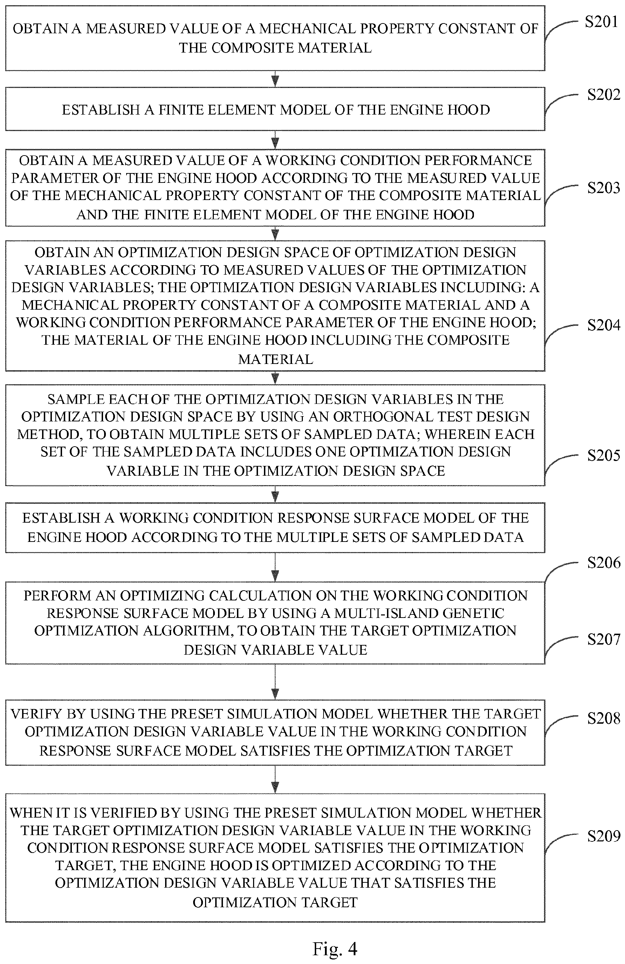

Fig. 4 is a flow chart of a method for optimization design of an engine hood according to an exemplary embodiment. As shown in Fig. 4, the method includes the following steps S201-S209.

In step S201, a measured value of a mechanical property constant of the composite material is obtained.

In step S202, a finite element model of the engine hood is established.

In step S203, a measured value of a working condition performance parameter of the engine hood is obtained according to the measured value of the mechanical property constant of the composite material and the finite element model of the engine hood.

In step S204, an optimization design space of optimization design variables is obtained according to measured values of the optimization design variables; the optimization design variables including: a mechanical property constant of a composite material and a working condition performance parameter of the engine hood; the material of the engine hood including the composite material.

In step S205, each of the optimization design variables in the optimization design space is sampled by using an orthogonal test design method, to obtain multiple sets of sampled data; wherein each set of the sampled data includes one optimization design variable in the optimization design space.

In step S206, a working condition response surface model of the engine hood is established according to the multiple sets of sampled data.

In step S207, an optimizing calculation is performed on the working condition response surface model by using a multi-island genetic optimization algorithm, to obtain the target optimization design variable value.

In step S208, it is verified by using the preset simulation model whether the target optimization design variable value in the working condition response surface model satisfies the optimization target.

In step S209, when it is verified by using the preset simulation model whether the target optimization design variable value in the working condition response surface model satisfies the optimization target, the engine hood is optimized according to the optimization design variable value that satisfies the optimization target.

The followings are embodiments of a device of the present invention, which can be used to implement the embodiments of the method of the present invention.

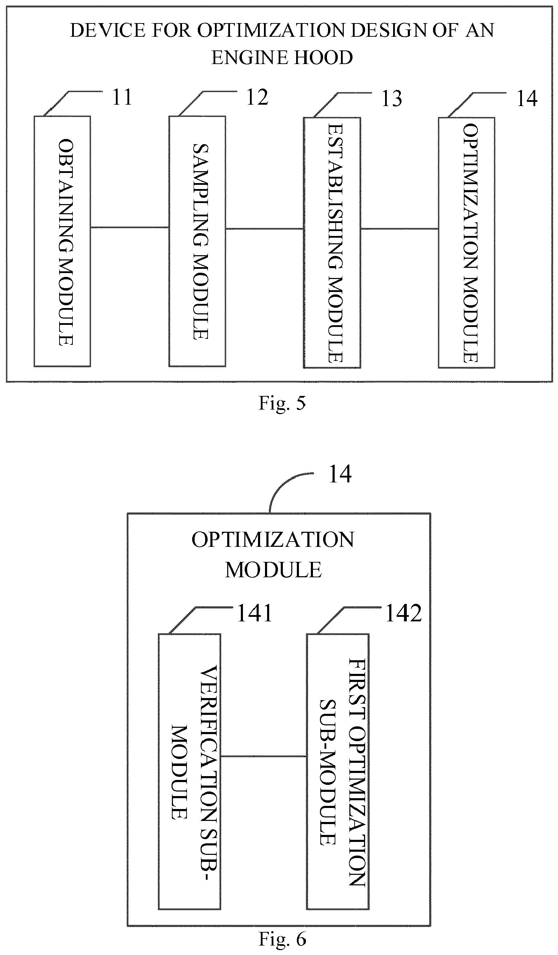

Fig. 5 is a block diagram of a device for optimization design of an engine hood according to an exemplary embodiment. As shown in Fig. 5, the device for optimization design of an engine hood includes:
an obtaining module 11, configured to obtain an optimization design space of optimization design variables; the optimization design variables including a mechanical property constant of a composite material and a working condition performance parameter of the engine hood; the material of the engine hood including the composite material;
a sampling module 12, configured to sample each of the optimization design variables in the optimization design space obtained by the obtaining module 11 by an orthogonal test design method, to obtain multiple sets of sampled data; wherein each set of the sampled data includes one optimization design variable in the optimization design space;
an establishing module 13, configured to establish a working condition response surface model of the engine hood according to the multiple sets of sampled data sampled by the sampling module 12; and
an optimization module 14, configured to perform an optimization design on the engine hood according to the working condition response surface model established by the establishing module 13.

In an embodiment, as shown in Fig. 6, the optimization module 14 includes a verification sub-module 141 and a first optimization sub-module 142,
the verification sub-module 141 is configured to verify, by using a preset simulation model, whether a target optimization design variable value in the working condition response surface model established by the establishing module 13 satisfies an optimization target; and
the first optimization sub-module 142 is configured to, when the verification sub-module 141 verifies by using a preset simulation model the target optimization design variable value in the working condition response surface model established by the establishing module 13, optimize the engine hood according to the optimization design variable value that satisfies the optimization target.

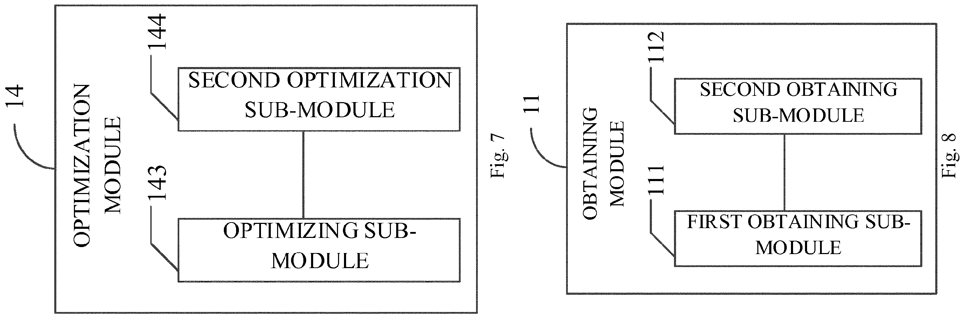

In an embodiment, as shown in Fig. 7, the optimization module 14 includes an optimizing sub-module 143 and a second optimization sub-module 144,
the optimizing sub-module 143 is configured to perform by using a preset optimization algorithm an optimizing calculation on the working condition response surface model established by the establishing module 13, to obtain the target optimization design variable value; and
the second optimization sub-module 144 is configured to perform the optimization design on the engine hood according to the target optimization design variable value obtained by the optimizing sub-module 143.

In an embodiment, the preset optimization algorithm includes a multi-island genetic optimization algorithm.

In an embodiment, as shown in Fig. 8, the obtaining module 11 includes a first obtaining sub-module 111 and a second obtaining sub-module 112,
the first obtaining sub-module 111 is configured to obtain a measured value of an optimization design variable; and
the second obtaining sub-module 112 is configured to obtain the optimization design space of the optimization design variable according to the measured value of the optimization design variable obtained by the first obtaining sub-module 111.

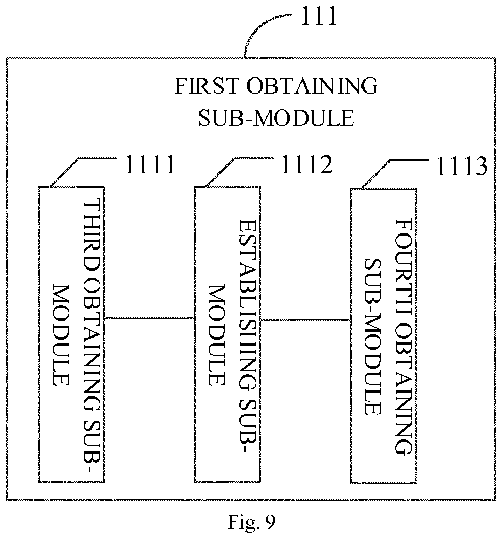

In an embodiment, as shown in Fig. 9, the first obtaining sub-module 111 includes a third obtaining sub-module 1111, an establishing sub-module 1112, and a fourth obtaining sub-module 1113,
the third obtaining sub-module 1111 is configured to obtain a measured value of the mechanical property constant of the composite material;
the establishing sub-module 1112 is configured to establish a finite element model of the engine hood; and
the fourth obtaining sub-module 1113 is configured to obtain, according to the measured value of the mechanical property constant of the composite material obtained by the third obtaining sub-module 1111 and the finite element model of the engine hood established by the establishing sub-module 1112, a measured value of the working condition performance parameter of the engine hood.

With regard to the device of the above embodiments, the specific manner in which each of the modules operates has been described in detail in the embodiments relating to the method, and therefore will not be repeated in detail herein.

Other embodiments of the present invention will be apparent to those skilled in the art from consideration of the specification and practice of the present invention. This invention is intended to cover any variations, uses, or adaptations of the present invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for optimization design of an engine hood, comprising:
obtaining (S101) an optimization design space of optimization design variables, wherein the optimization design variables include a mechanical property constant of a composite material and a working condition performance parameter of the engine hood, and a material of the engine hood includes the composite material;
sampling (S102) each of the optimization design variables in the optimization design space by an orthogonal test design method, to obtain multiple sets of sampled data, wherein each set of the sampled data includes one optimization design variable in the optimization design space;
establishing (S103) a working condition response surface model of the engine hood according to the multiple sets of sampled data; and
performing (S104) an optimization design on the engine hood according to the working condition response surface model.

2. The method of claim 1, wherein performing (S104) an optimization design on the engine hood according to the working condition response surface model comprises:
verifying, by using a preset simulation model, whether a target optimization design variable value in the working condition response surface model satisfies an optimization target; and
optimizing the engine hood according to the optimization design variable value that satisfies the optimization target when it is verified by using the preset simulation model that the target optimization design variable value in the working condition response surface model satisfies the optimization target.

3. The method of claim 1 or 2, wherein said performing (S104) an optimization design on the engine hood according to the working condition response surface model comprises:
performing an optimizing calculation on the working condition response surface model by using a preset optimization algorithm, to obtain the target optimization design variable value; and
performing the optimization design on the engine hood according to the target optimization design variable value.

4. The method of claim 3, wherein the preset optimization algorithm comprises a multi-island genetic optimization algorithm.

5. The method of claim 1, wherein said obtaining (S101) an optimization design space of optimization design variables comprises:
obtaining measured values of the optimization design variables; and
obtaining the optimization design space of the optimization design variables according to the measured values of the optimization design variables.

6. The method of claim 5, wherein said obtaining measured values of the optimization design variables comprises:
obtaining a measured value of the mechanical property constant of the composite material;
establishing a finite element model of the engine hood; and
obtaining a measured value of the working condition performance parameter of the engine hood according to the measured value of the mechanical property constant of the composite material and the finite element model of the engine hood.

7. A device for optimization design of an engine hood, comprising:
an obtaining module (11), configured to obtain an optimization design space of optimization design variables, wherein the optimization design variables include a mechanical property constant of a composite material and a working condition performance parameter of the engine hood, and a material of the engine hood includes the composite material;
a sampling module (12), configured to sample by an orthogonal test design method each of the optimization design variables in the optimization design space obtained by the obtaining module (11), to obtain multiple sets of sampled data, wherein each set of the sampled data includes one optimization design variable in the optimization design space;
an establishing module (13), configured to establish a working condition response surface model of the engine hood according to the multiple sets of sampled data sampled by the sampling module (12); and
an optimization module (14), configured to perform an optimization design on the engine hood according to the working condition response surface model established by the establishing module (13).

8. The device of claim 7, wherein the optimization module (14) includes a verification sub-module (141) and a first optimization sub-module (142),
wherein the verification sub-module (141) is configured to verify, by using a preset simulation model, whether a target optimization design variable value in the working condition response surface model established by the establishing module (13) satisfies an optimization target; and
the first optimization sub-module (142) is configured to, when the verification sub-module (141) verifies by using a preset simulation model the target optimization design variable value in the working condition response surface model established by the establishing module (13), optimize the engine hood according to the optimization design variable value that satisfies the optimization target.

9. The device of claim 7 or 8, wherein the optimization module (14) includes an optimizing sub-module (143) and a second optimization sub-module (144),
wherein the optimizing sub-module (143) is configured to perform by using a preset optimization algorithm an optimizing calculation on the working condition response surface model established by the establishing module (13), to obtain the target optimization design variable value; and
the second optimization sub-module (144) is configured to perform the optimization design on the engine hood according to the target optimization design variable value obtained by the optimizing sub-module (143).

10. The device of claim 9, wherein the preset optimization algorithm comprises a multi-island genetic optimization algorithm.

11. The device of claim 7, wherein the obtaining module (11) includes a first obtaining sub-module (111) and a second obtaining sub-module (112),
wherein the first obtaining sub-module (111) is configured to obtain a measured value of an optimization design variable; and
the second obtaining sub-module (112) is configured to obtain the optimization design space of the optimization design variable according to the measured value of the optimization design variable obtained by the first obtaining sub-module.

12. The device of claim 11, wherein the first obtaining sub-module (111) includes a third obtaining sub-module (1111), an establishing sub-module (1112), and a fourth obtaining sub-module (1113),
wherein the third obtaining sub-module (1111) is configured to obtain a measured value of the mechanical property constant of the composite material;
the establishing sub-module (1112) is configured to establish a finite element model of the engine hood; and
the fourth obtaining sub-module (1113) is configured to obtain, according to the measured value of the mechanical property constant of the composite material obtained by the third obtaining sub-module and the finite element model of the engine hood established by the establishing sub-module, a measured value of the working condition performance parameter of the engine hood.
